# EUROPÄISCHE PATENTANMELDUNG

(11) **EP 2 823 999 A2**
(43) Veröffentlichungstag der Anmeldung: **14.01.2015**
(21) Anmeldenummer: 14180505.1
(22) Anmeldetag: 04.03.2010
(51) Int. Cl.: B60R 13/04, B60R 13/06

(54) **Durchleuchtete Zierleiste**

(62) Teilanmeldung aus: 12185657.9
(71) Anmelder: DURA Automotive Body & Glass Systems GmbH, 58840 Plettenberg (DE)
(72) Erfinder: Schulte, Martin, 58802 Balve (DE)
(74) Vertreter: Tersteegen, Felix

(57) **Zusammenfassung**

Die Erfindung betrifft ein Leistenbauteil für ein Kraftfahrzeug mit einer Dichtleiste für den Fensterschacht einer Fahrzeugtür und einer als Abdeckleiste der Dichtleiste (1) dienenden Zierleiste (2), wobei die Zierleiste eine Profilleiste (5) mit einer bei bestimmungsgemäßer Montage vom Fahrzeug weg gerichteten und von außen sichtbaren Außenfläche (11) und einer Innenfläche (8) sowie zumindest ein Leuchtmittel (6) aufweist, und wobei die Profilleiste zumindest in einem zu durchleuchtenden Teilbereich transluzent oder transparent ausgeführt ist.

Die Zierleiste sollte konstruktiv einfach aufgebaut und kostengünstig herzustellen sein. Sie sollte zudem flach aufbauen und Platz sparend montierbar sein, aber dennoch einen gegenüber den bekannten mit Leuchtmitteln versehenen Zierleisten einen optisch höherwertigen Eindruck vermitteln und sich äußerlich von nicht beleuchteten Zierleisten möglichst wenig unterscheiden.

Um dies zu erreichen, ist vorgesehen, dass die Außenfläche der Profilleiste die äußere Sichtfläche der Zierleiste bildet und das wenigstens eine Leuchtmittel auf Seiten der Innenfläche der Profilleiste angeordnet ist, um die Profilleiste zu durchleuchten, wobei die Lichtstrahlen von hinten durch die Innenfläche der Profilleiste hindurchtreten und vorne aus der Außenfläche der Profilleiste wieder austreten.

## Beschreibung

Die Erfindung betrifft eine Zierleiste für ein Kraftfahrzeug, insbesondere als Abdeckleiste einer Dichtleiste für den Fensterschacht einer Fahrzeugtür, wobei die Zierleiste eine Profilleiste mit einer bei bestimmungsgemäßer Montage vom Fahrzeug weg gerichteten und von außen sichtbaren Außenfläche und einer Innenfläche sowie zumindest ein Leuchtmittel aufweist, wobei die Profilleiste zumindest in einem zu durchleuchtenden Teilbereich transluzent oder transparent ausgeführt ist.

Es ist bekannt, Zierleisten für Kraftfahrzeuge mit Leuchtmitteln zu versehen, um das Fahrzeug optisch aufzuwerten. Die Offenlegungsschrift DE 10 2008 027 128 A1 offenbart eine Abdeck- bzw. Dichtleiste für ein Kraftfahrzeug mit einer Profilleiste, in die eine LED zur Beleuchtung eines auf der Außenfläche angeordneten Verkleidungselements bzw. einer auf der Außenfläche vorgesehenen Abdeckschicht eingebettet ist. Die in der DE 10 2008 027 128 A1 offenbarte Konstruktion ist allerdings verhältnismäßig komplex und aufwendig in der Herstellung und ermöglicht ferner wegen der nur an diskreten Positionen vorgesehenen LEDs keine durchgängig gleichförmige Beleuchtung der gesamten Abdeck- bzw. Dichtleiste. Außerdem wird es als Nachteil angesehen, dass die Abdeck- bzw. Dichtleiste sich aufgrund ihres äußeren Aufbaus von außen als beleuchtete Leiste identifizieren lässt.

Es ist daher Aufgabe der Erfindung, eine Zierleiste der eingangs genannten Art zur Verfügung zu stellen, die konstruktiv einfach aufgebaut und kostengünstig herzustellen ist. Sie sollte zudem flach aufbauen und Platz sparend montierbar sein, aber dennoch einen gegenüber den bekannten mit Leuchtmitteln versehenen Zierleisten optisch höherwertigen Eindruck vermitteln und sich äußerlich von nicht beleuchteten Zierleisten möglichst wenig bis gar nicht unterscheiden.

Diese Aufgabe wird nach der Erfindung dadurch gelöst, dass die Außenfläche der Profilleiste die äußere Sichtfläche der Zierleiste bildet und das wenigstens eine Leuchtmittel auf Seiten der Innenfläche der Profilleiste angeordnet ist, um die Profilleiste zu durchleuchten, wobei die Lichtstrahlen von hinten durch die Innenfläche der Profilleiste hindurchtreten und vorne aus der Außenfläche der Profilleiste wieder austreten. Damit ist ein Einbetten von Leuchtmitteln in die Profilleiste überflüssig. Die Lichtstrahlen treten von hinten durch die Innenfläche der Profilleiste hindurch und vorne aus der Außenfläche der Profilleiste wieder aus, so dass die Profilleiste als solche durch das Hinterleuchten von hinten aus sich heraus zu leuchten scheint. Äußerlich ist die Zierleiste im montierten Zustand von anderen, nicht hinterleuchteten Zierleisten kaum bis gar nicht zu unterscheiden.

Um die erwünschte Optik weiter zu verbessern, kann insbesondere vorgesehen sein, dass die Opazität der Profilleiste im nicht durchleuchteten Zustand auf der Innenseite der Profilleiste befindliche Baugruppenkomponenten, insbesondere das Leuchtmittel und/oder eine Verschlussplatte, nicht erkennen lässt. Im nicht beleuchteten Zustand wirkt die Profilleiste also bevorzugt intransparent, beispielsweise schwarz. Dies kann durch im Profilleistenmaterial befindlichen Füllstoff erreicht werden. Erst das Einschalten der Beleuchtung lässt erahnen, dass hinter der Profilleiste weitere Baugruppenkomponenten zur Beleuchtung der Zierleiste vorhanden sein müssen, wobei diese aber auch im beleuchteten Zustand der Zierleiste nach Möglichkeit nicht im Detail erkennbar sein sollten. Es wird also die die äußere Sichtfläche der Zierleiste bildende Profilleiste selbst durchleuchtet. Ein Lichtleiter, eine LED oder ein sonstiges, die Materialhomogenität der Profilleiste aufhebendes Bauteil ist nicht erforderlich. Die Profilleiste wird nicht von einem Bauteil, das von außen sichtbar wäre, durchdrungen. Die Sichtfläche der Profilleiste ist bevorzugt als durchgängig hochglänzende Sichtfläche ausgebildet.

Bevorzugt wird das Leuchtmittel von einer Leuchtfolie, insbesondere einer OLED Folie (organische Leuchtdiode) gebildet, wobei als unter den Begriff OLED fallend auch eine PHOLED (phosphoreszierende OLED) angesehen wird. Eine OLED bietet sich an, weil diese extrem flach aufbaut, nur einen sehr geringen Bauraum erfordert und auf nahezu jedes Material gedruckt werden kann. In ihrer Herstellung bieten OLEDs gegenüber der LCD-Technologie eine signifikante Kostenersparnis, insbesondere weil sich die OLEDs leicht verarbeiten lassen und einfach anzusteuern sind. Im Vergleich zu LEDs entwickeln OLEDs weniger Wärme und besitzen einen größeren Temperaturbereich. Auch die für OLEDs erforderliche niedrige Betriebsspannung ist von Vorteil. Die Verwendung von OLEDs stellt darüber hinaus sicher, dass die Zierleiste im beleuchteten Zustand keine durch die Beleuchtung verursachte kritische Erwärmung erfährt.

Ein weiterer, in der Verwendung von Leuchtmittelfolien, insbesondere OLED-Folien, liegender Vorteil ist, dass diese den Eindruck einer aus sich heraus leuchtenden Fläche erzeugen, so dass die Zierleiste derart ausgebildet werden kann, dass eine sich über die gesamte Zierleistenlänge erstreckende, durchgängige und gleichförmige Beleuchtung möglich ist. Es kann eine besonders schatten- und kontrastarme Ausleuchtung erzielt werden, so dass der Eindruck erweckt wird, als ob die Zierleiste gleichmäßig aus sich heraus leuchtet. Selbstverständlich kann das Leuchtmittel sich aber auch nur über eine Teillänge der Profilleiste erstrecken, so dass sich auf der Außenfläche ein hinterleuchtetes Sichtfenster bzw. eine Art Bildschirm ergibt.

Die Anwendung ist aber nicht notwendiger Weise auf OLEDs als Leuchtmittel beschränkt. Insbesondere kommen als weitere Leuchtmittel auch andere folienartige Leuchtmittel in Betracht, beispielsweise eine Elektroluminiszenz-Folie (LM-Folie)

Bevorzugt ist das Leuchtmittel auf einer Verschlussplatte angeordnet, wobei die Verschlussplatte mit der Profilleiste bevorzugt fest verbunden, insbesondere flüssigkeitsdicht verschweißt oder verklebt, ist. Insbesondere kann das folienartige Leuchtmittel direkt auf die Verschlussplatte aufgedruckt sein. Durch die feste Verbindung der Verschlussplatte mit der Profilleiste dient die Profilleiste als Trägerelement für Verschlussplatte und das Leuchtmittel. Gleichzeitig bildet die Verschlussplatte auf der einen und die Profilleiste bzw. deren Innenfläche auf der anderen Seite eine Leuchtmittelkammer aus, in der das Leuchtmittel bevorzugt feuchtigkeitsdicht eingeschlossen ist. Lediglich ein Durchlass für einen elektrischen Leiter kann vorzusehen sein.

Natürlich kann die Verschlussplatte auch mit der Profilleiste verschraubt oder anderweitig lösbar verbunden sein, wobei dann bevorzugt ein weiteres Dichtelement zwischen Verschlussplatte und Profilleiste vorzusehen ist.

Die Verschlussplatte sollte überdies in sich flexibel ausgestaltet sein, so dass deren Handhabung und die Handhabung der Zierleiste im Ganzen während der Montage und bei Reparaturmaßnahmen unproblematisch ist und sich die Zierleiste problemlos an fahrzeugseitig vorhandene oder durch die Montage bzw. Reparatur bedingte Krümmungen oder Verformungen anpassen kann, ohne dass die Gefahr eines Bruchs besteht.

Um einen besonders homogenen und gleichförmig erscheinenden Lichteffekt erzielen zu können, ist bevorzugt vorgesehen, dass die Profilleiste an ihrer Innenseite eine das Licht streuende Grenzfläche aufweist. Diese Grenzfläche kann sich über die gesamte Innenfläche der Profilleiste erstrecken oder aber nur einen Teilbereich der Innenfläche ausmachen. Die Grenzfläche kann aufgeraut, mattiert oder genarbt sein, so dass das auf die Innenfläche treffende Licht bedingt durch die speziell bearbeitete Grenzfläche diffus in die transluszente Profilleiste eintritt und dem entsprechend auch diffus über die Außenfläche wieder austritt. Auch hierdurch wird der Eindruck einer aus sich heraus leuchtenden Zierleiste gefördert.

Zusätzlich oder alternativ zu der auf den Lichteinfall zerstreuend wirkenden Grenzfläche kann vorgesehen sein, dass zumindest der unmittelbar an das Leuchtmittel angrenzende Profilquerschnitt der Profilleiste nach Art einer optischen Sammel- oder Zerstreuungslinse ausgebildet ist. Es kann sich je nach Ausgestaltung des Querschnittprofils um verschiedene Linsenformen, also insbesondere um eine bi-konvexe, plankonvexe oder konkav-konvexe bzw. um eine bi-konkave, plan-konkave oder konvexkonkave Linsenform handeln. Hierdurch kann der Lichtaustritt und somit das optische Erscheinungsbild gezielt beeinflusst werden. Diese Ausgestaltung ist auch von Vorteil, um gesetzliche Vorgaben zu erfüllen, nach denen der Abstrahlwinkel von am Fahrzeug befindlichen Leuchtelementen bestimmte Vorgaben erfüllen muss, beispielsweise nicht nach oben abstrahlen darf.

Bevorzugt ist die Profilleiste einstückig und materialhomogen ausgebildet ist. Dies bedeutet insbesondere, dass die die äußere Sichtfläche der Zierleiste bildende Profilleiste selbst durchleuchtet wird und ein Lichtleiter, eine LED oder ein sonstiges, die Materialhomogenität der Profilleiste durchbrechendes Bauteil nicht erforderlich ist. Es ist also kein Bauteil vonnöten, das durch die Profilleiste hindurch dringt und von außen sichtbar wäre.

Die Profilleiste besteht bevorzugt aus einem einzigen, homogenen Werkstoff. Als Werkstoff kommen insbesondere thermoplastische Kunststoffe in Betracht, beispielsweise PMMA, SAN, PC oder ABS. Grundsätzlich ist es allerdings auch möglich, dass die Profilleiste im Mehrkomponenten-Spritzgussverfahren hergestellt wird. Dies ist insbesondere dann von Vorteil, wenn an die Profilleiste randseitig Funktionselemente wie Dichtlippen, Gleitbeschichtungen oder Ähnliches aufweisen soll. Das Mehrkomponentenverfahren kann außerdem sinnvoll sein, wenn die Profilleiste mehrschichtig ausgeführt sein soll, beispielsweise außenseitig aus einem kratzfesten, optisch hochwertigen Kunststoff und innenseitig aus einem eher duktilen, weniger bruchgefährdeten Kunststoff bestehen soll, mit dem zum Beispiel die Ausbildung von Funktionsteilen wie Rastmittel, Befestigungsdome oder Ähnlichem möglich ist.

Die Profilleiste kann außerdem aus einem Materialverbund bestehen. Beispielsweise kann die Außenfläche oder die Innenfläche der Zierleiste zumindest zum Teil durch ein Einlegeteil aus Metall, insbesondere aus Aluminium, Edelstahl oder Titan, gebildet sein. Dieses wird bevorzugt vor dem Fertigungsprozess in das Werkzeug eingelegt und vom Kunststoff hinterspritzt. Als Herstellungsverfahren bietet sich das Spritzgussverfahren, das Extrusionsverfahren oder das Exjection^{®}-Verfahren an (Exjection ist eine registrierte Marke). Das Exjection^{®}-Verfahren bietet insbesondere die Möglichkeit, dass Enddome, Befestigungsdome oder Versteifungsrippen unmittelbar and der Profilleiste angeformt sein können.

Von besonderem Vorteil ist eine Profilleiste, bei der die Endkappen als integraler Bestandteil der Profilleiste werkstoffeinstückig mit der Profilleiste ausgeformt werden. So lässt sich die Profilleiste als vollständig fugen- und nahtloses, längliches Profilelement ausgestalten, ohne dass beispielsweise die Notwendigkeit bestünde, für das Profilelement stirnseitige Endkappen vorzusehen.

Zur Erzielung eines weiteren optischen Effekts kann es auch vorgesehen sein, dass in die Profilleiste Dekorteile, beispielsweise Reflektionspartikel oder Reflektionskörper, eingebettet sind. Ebenfalls vorgesehen sein können Dekorteile in Form von Dekor- oder Informationsblenden, die Licht nur in den die Blendenform definierten Bereiche durchlassen. Damit ist es möglich, Schriften, Fahrzeugembleme oder sonstige Kennzeichnungen zu Dekorations- oder Informationszwecken in der Zierleiste abzubilden. Die Dekorteile und/oder Dekor- bzw. Informationsblenden werden bevorzugt im Werkzeug eingelegt und umspritzt oder hinterspritzt.

Zur Darstellung von Informationen über die Zierleiste oder zur Erzielung komplexerer optischer Effekte ist es natürlich auch möglich, dass das Leuchtmittel von einer Bildschirmfolie gebildet ist. So können neben unbewegten auch bewegte Bilder oder Lichteffekte dargestellt werden.

Die vorstehend beschriebene, zumindest teilweise hinterleuchtete Zierleiste kann also nicht nur als Designelement, zum Beispiel bei Nachtfahrt, sondern auch als Fahrzeugintegriertes Informationssystem verwendet werden. Die Zierleiste kann unter anderem am Kühlergrill (z.B. beleuchtete Kühlerhaubenrippen), am Seitenrahmen, am Türrahmen, im Einstiegsbereich oder an der Heckklappe angeordnet sein.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
Fig. 1 eine auf einem Dichtungsprofil befestigte Zierleiste nach einer ersten Ausführungsform und
Fig. 2 eine auf einem Dichtungsprofil befestigte Zierleiste nach einer zweiten Ausführungsform.

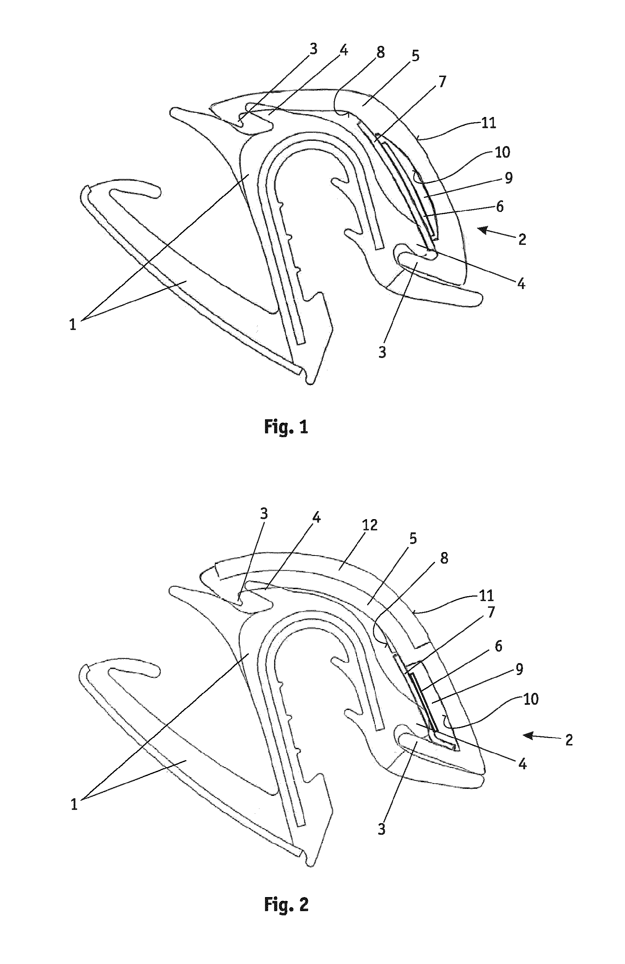

In Figur 1 ist eine auf einem Dichtungsprofil 1 befestigte Zierleiste 2 dargestellt. Das Dichtungsprofil 1 wird mit seinem U-förmigen, durch einen eingelegten Metallbügel verstärkten Abschnitt auf ein Karosserieteil eines Kraftfahrzeugs aufgesteckt. Die Zierleiste 2 ist eingerichtet, dieses Dichtungsprofil 1 abzudecken und optisch möglichst hochwertig zu kaschieren. Hierzu weist die Zierleiste 2 eine bogenförmige Profilleiste 5 auf, die mit zwei an den freien Enden vorgesehenen Rasthaken 3 Haltefortsätze 4 des Dichtungsprofils 1 hintergreift. Durch die dem System aus Dichtungsprofil und Profilleiste innewohnende Elastizität lässt sich die Zierleiste 2 sicher auf dem Dichtungsprofil 1 sicher und dauerhaft verrasten, wobei die Zierleiste 2 aber bevorzugt lösbar mit dem Dichtungsprofil 1 verbunden ist.

Die Zierleiste 2 weist neben der materialhomogenen Profilleiste 5 ein Leuchtmittel 6 auf, dass auf einer Verschlussplatte 7 angeordnet ist. Die Verschlussplatte 7 ist mit der Innenfläche 8 der Profilleiste 5 fest verbunden, bevorzugt verklebt oder verschweißt. Die Verschlussplatte 7 auf der einen und die Profilleiste 5 auf der anderen Seite bilden eine Leuchtmittelkammer 9 aus, innerhalb derer das Leuchtmittel 6 eingekapselt ist. Die Verbindung zwischen Verschlussplatte 7 und Profilleiste 5 ist flüssigkeitsdicht, so dass das Leuchtmittel 6 innerhalb der Leuchtmittelkammer 9 wirksam gegen Einflüsse von außen, insbesondere gegen Feuchtigkeit, geschützt ist.

Das Leuchtmittel 6 ist durch eine OLED-Folie gebildet, die unmittelbar auf der Verschlussplatte 7 aufgedruckt oder mit dieser auf sonstige Art, beispielsweise durch Verkleben, verbunden ist. Die Verschlussplatte 7 dient somit auch als Trägerplatte für das Leuchtmittel 6.

Der unmittelbar zum Leuchtmittel 6 benachbarte Bereich der Profilleiste 5 ist durch die Ausbildung der Leuchtmittelkammer 9 nach Art einer optischen Linse ausgestaltet. In Figur 1 ist dies eine konkav-konvexe Sammellinse. Je nach gewünschtem optischem Effekt kann selbstverständlich auch auf andere Linsenformen zurückgegriffen werden. Die zur Leuchtmittelkammer gewandte, innere Grenzfläche 10 der Profilleiste 5, also in Figur 1 das "Dach" der Leuchtmittelkammer, bildet die Eintrittsfläche der Linse, die Außenfläche 11 der Profilleiste bildet die Austrittsfläche der Linse. Die innere Grenzfläche 10 ist ein Teilbereich der Innenfläche 8 der Profilleiste 5.

Alternativ oder zusätzlich zu der Ausgestaltung zumindest eines Teilbereichs der Profilleiste als optische Linse kann die Grenzfläche 10, also der zum Leuchtmittel 6 unmit-telbar benachbarte Bereich der Innenfläche 8 der Profilleiste 5, derart ausgestaltet sein, dass das Licht beim Durchtritt durch die Grenzfläche 10 gestreut wird. Dadurch erstrahlt die Profilleiste 5 bzw. deren Außenfläche gleichmäßiger. Die Oberfläche im Bereich der Grenzfläche 10 kann dazu insbesondere aufgeraut, mattiert, geriffelt oder genarbt sein. Zum gleichen Zweck kann außerdem vorgesehen sein, dass die Grenzfläche 10 mit einer lumineszierenden Schicht versehen ist.

Um die das von dem Leuchtmittel6 emittierte Licht möglichst vollständig auszunutzen und über die Außenfläche zum Fahrzeugäußeren zu lenken, kann die Innenfläche 8 der Profilleiste 5 mit einer Reflexionsbeschichtung (in den Figuren nicht gezeigt) versehen sein. Diese Beschichtung kann von einer aufgebrachten Folie gebildet oder andersartig aufgetragen, beispielsweise aufgedampft, werden.

Die Opazität der Profilleiste 5 ist bevorzugt derart ausgewählt, dass die auf Seiten der Innenfläche liegenden Baugruppenkomponenten, also insbesondere die Verschlussplatte 7 und das Leuchtmittel 6, sowie die angrenzenden Bauteile und Körperkanten, also insbesondere die Dichtleiste 1, im nicht leuchtenden Zustand von außen nicht durchscheinen.

Die in Figur 2 gezeigte Zierleiste 2 unterscheidet sich von der in Figur 1 gezeigten Zierleiste 2 im Wesentlichen durch die andersartige Profilleistenform, die Form und Anordnung der Leuchtmittelkammer 9 und der Verschlussplatte 7, das Fehlen einer linsenförmigen Ausgestaltung eines Teils der Profilleiste 5 sowie durch das Vorhandensein eines zusätzlichen Dekorelements 12 auf der Außenfläche 11 der Profilleiste 5.

Die Profilleiste 5 nach Figur 2 ist außenseitig mit einem weiteren Dekorelement 12 versehen, dass bevorzugt ein Einlegeteil aus Metall ist. Dieses wird in das Werkzeug eingelegt und vom Kunststoffmaterial der Profilleiste 5 hinterspritzt, so dass es fest und sicher mit der Profilleiste 5 verbunden ist. Durch die Verwendung eines solchen metallischen Dekorelements 12 kann die Außenfläche der Zierleiste nochmals optisch und haptisch aufgewertet werden.

In Figur 2 überdecken sich das Leuchtmittel 6 und das Dekorelement 12 nicht gegenseitig. Es kann allerdings auch sinnvoll sein, dass sich Leuchtmittel 6 und die Dekorelement 12 gegenseitig überdecken. Dies macht insbesondere dann Sinn, wenn definierte Bereiche des Dekorelements 12 lichtdurchlässig sind, um so beispielsweise Muster, Buchstaben oder sonstige Zeichen als Leuchtschrift auf der Außenfläche der Zierleiste erscheinen zu lassen. Diese sind als Löcher, Ausstanzungen oder sonstige Ausnehmungen im ansonsten lichtundurchlässigen Dekorelement 12 vorzusehen. Diese Löcher oder Ausstanzungen füllen sich bevorzugt beim Hinterspritzen des Dekorelements 12 mit dem eingespritzten Kunststoff, so dass sich eine insgesamt glatte Außenfläche der Zierleiste ergibt.

Das Dekorelement 12 muss nicht notwendiger Weise - wie in Figur 2 gezeigt - die äußere Oberfläche der Zierleiste 2 bilden, sondern kann auch weiter innen liegen und außenseitig durch den transparenten oder zumindest transluszenten Kunststoff der Profilleiste 5 abgedeckt sein. Dies hat insbesondere den Vorteil, dass die sich ansonsten auf der Außenseite ergebenden, sich längs der Zierleiste erstreckenden Fugen entfallen können. Die Zierleiste wird insgesamt toleranzunempfindlicher, was Vorteile für Fertigung und Qualitätssicherung mit sich bringt und ist auch insgesamt besser vor Umwelteinflüssen, die ansonsten langfristig zu einem Ablösen des Dekorelements 12 von der Profilleiste 5 führen könnten, geschützt.

Es sei darauf hingewiesen, dass das Leuchtmittel 6 nicht notwendiger Weise eine sich über die gesamte Zierleiste durchgehend erstreckende Leuchtmittelfolie sein muss. Je nach Anwendungsfall kann sich das Leuchtmittel auch nur über eine Teillänge der Zierleiste erstrecken oder es können mehrere, bevorzugt mehrere unmittelbar aneinander angrenzende Leuchtmittel vorgesehen sein, die selektiv ansteuerbare Bereiche bilden, beispielsweise um nur bestimmte, ausgewählte Informationen darzustellen.

Ein weiterer Vorteil der beschriebenen Erfindung im Allgemeinen sowie der in den Figuren 1 und 2 gezeigten Ausführungsformen besteht darin, dass die hinterleuchteten Zierleisten ebenso wie kompatible, nicht hinterleuchtete Zierleisten wahlweise auf ein und dasselbe Trägerprofil bzw. Dichtungsprofil aufgesetzt werden können. Dichtfunktion und Optik bzw. Leuchtfunktion der Baugruppe sind vollständig voneinander getrennt, so dass allein die Zierleiste die optische Funktion übernimmt. Das Dichtungsprofil muss nicht speziell für den Einsatz einer hinterleuchteten Zierleiste vorbereitetet oder gezielt hierfür ausgewählt werden.

Für den Fahrzeughersteller besteht die Möglichkeit, das Fahrzeug allein durch die Auswahl der auf das für alle Fahrzeugausstattungen gleiche Dichtungsprofil 1 aufzusetzenden Zierleiste 2 optisch deutlich aufzuwerten, beispielsweise im Rahmen eines als Sonderzubehör angebotenen Lichtpakets. Eine solche Sonderaustattung ist aus produktionslogistischen Gesichtpunkten besonders vorteilhaft. Auch können so Fahrzeuge, die ursprünglich eine nicht hinterleuchtete Zierleiste aufwiesen, problemlos und handwerklich besonders einfach nachgerüstet werden, ohne dass das Austauschen des Dichtungsprofils notwendig wäre. Hierzu sollte die Zierleiste lösbar auf dem Dich-tungsprofil aufsitzen.

### Bezugszeichenliste

- 1: Dichtungsprofil
- 2: Zierleiste
- 3: Rasthaken
- 4: Haltefortsatz
- 5: Profilleiste
- 6: Leuchtmittel
- 7: Verschlussplatte
- 8: Innenfläche der Profilleiste
- 9: Leuchtmittelkammer
- 10: Grenzfläche
- 11: Außenfläche der Profilleiste
- 12: Dekorelement

## Patentansprüche

1. Leistenbauteil für ein Kraftfahrzeug mit einer Dichtleiste für den Fensterschacht einer Fahrzeugtür und einer als Abdeckleiste der Dichtleiste (1) dienenden Zierleiste (2), wobei die Zierleiste (2) eine Profilleiste (5) mit einer bei bestimmungsgemäßer Montage vom Fahrzeug weg gerichteten und von außen sichtbaren Außenfläche (11) und einer Innenfläche (8) sowie zumindest ein Leuchtmittel (6) aufweist, und wobei die Profilleiste (5) zumindest in einem zu durchleuchtenden Teilbereich transluzent oder transparent ausgeführt ist, **dadurch gekennzeichnet, dass** die Außenfläche (11) der Profilleiste (5) die äußere Sichtfläche der Zierleiste (2) bildet und das wenigstens eine Leuchtmittel (6) auf Seiten der Innenfläche (8) der Profilleiste (5) angeordnet ist, um die Profilleiste zu durchleuchten, wobei die Lichtstrahlen von hinten durch die Innenfläche (8) der Profilleiste (5) hindurchtreten und vorne aus der Außenfläche (11) der Profilleiste (5) wieder austreten.

2. Leistenbauteil nach einem der vorhergehenden Ansprüche, **dadurch gekennzeichnet, dass** die Opazität der Profilleiste (5) im nicht durchleuchteten Zustand auf Seiten der Innenfläche (8) der Profilleiste (5) befindliche Baugruppenkomponenten, insbesondere das Leuchtmittel (6) und/oder eine Verschlussplatte (7), nicht durchscheinen lässt.

3. Leistenbauteil nach einem der beiden vorhergehenden Ansprüche, **dadurch gekennzeichnet, dass** das Leuchtmittel (6) eine OLED, eine PHOLED oder eine Elektrolumines-zenzfolie ist.

4. Leistenbauteil nach einem der vorhergehenden Ansprüche, **dadurch gekennzeichnet, dass** eine Verschlussplatte (7) vorgesehen ist, auf der das Leuchtmittel (6) angeordnet ist, wobei die Verschlussplatte (7) mit der Profilleiste (5) fest verbunden, insbesondere verschweißt oder verklebt, ist.

5. Leistenbauteil nach dem vorhergehenden Anspruch, **dadurch gekennzeichnet, dass** zwischen der Verschlussplatte (7) und der Profilleiste (5) eine Leuchtmittelkammer (9) ausgebildet ist.

6. Leistenbauteil nach einem der vorhergehenden Ansprüche, **dadurch gekennzeichnet, dass** die Profilleiste (5) an ihrer Innenfläche (8) eine das Licht streuende Grenzfläche (10) aufweist.

7. Leistenbauteil nach einem der vorhergehenden Ansprüche, **dadurch gekennzeichnet, dass** zumindest der unmittelbar an das Leuchtmittel (6) angrenzende Profilquerschnitt der Profilleiste (5) eine optische Sammel- oder Zerstreuungslinse ausbildet.

8. Leistenbauteil nach einem der vorhergehenden Ansprüche, **dadurch gekennzeichnet, dass** die Profilleiste (5) materialhomogen ausgebildet ist.

9. Leistenbauteil nach einem der vorhergehenden Ansprüche, **dadurch gekennzeichnet, dass** die Zierleiste (2) zusätzliche Dekorelemente (12) umfasst, die in die Profilleiste eingebettet oder außen- oder innenseitig fest an dieser angeordnet sind.
